# FASCICULE DE BREVET EUROPEEN

(11) **EP 2 565 009 B1**
(45) Date de publication et mention de la délivrance du brevet: **25.06.2014**
(21) Numéro de dépôt: 12182938.6
(22) Date de dépôt: 04.09.2012
(51) Int. Cl.: B29C 45/14, C09K 21/04

(54) **Pièces en plastique comprenant un revêtement ignifuge et leur procédé de préparation.**
Kunststoffteile mit feuerhemmender Beschichtung und ihr Herstellungsverfahren
Plastic parts having a flame-retardant coating and method for preparing same

(30) Priorité: 05.09.2011 FR 1157855
(43) Date de publication de la demande: 06.03.2013
(73) Titulaire: Schneider Electric Industries SAS, 92500 Rueil-Malmaison (FR)
(72) Inventeur: Ohl, Brigitte, 38050 GRENOBLE CEDEX 9 (FR)
(74) Mandataire: Augarde, Eric

(56) Documents cités:
- EP-A1- 1 375 594
- US-A1- 2003 127 765

## Description

### DOMAINE TECHNIQUE

L'invention a trait à des pièces en matière plastique comprenant un revêtement ignifuge.

Plus précisément, l'invention concerne des pièces comprenant un substrat basé sur une matrice polymère thermoplastique, et revêtu par une couche ignifuge.

L'invention concerne, en outre, un procédé de préparation de ces pièces.

Les pièces selon l'invention sont notamment des pièces utilisées dans l'industrie électrique.

### ÉTAT DE LA TECHNIQUE ANTÉRIEURE

Les matières plastiques, ou plus exactement les polymères thermoplastiques, sont utilisées dans de nombreux secteurs de l'industrie et notamment dans l'industrie électrique.

Pour de nombreuses utilisations des matières plastiques, il est nécessaire de leur incorporer un agent ignifuge.

Ainsi, les matières plastiques utilisées dans les appareils électriques doivent satisfaire à des normes sévères en matière de résistance au feu qui sont par exemple définies par des normes de la CEI qui sont notamment appliquées en France et en Europe. Pour les parties en matériau isolant, l'essai pratiqué est défini par la norme CEI 60695-2-11 pour produits finis.

La performance d'inflammabilité requise GWFI (« *Glow Wire Flamability Index* ») par le matériel pour service continu sans surveillance s'élève à 850°C ; si le matériel est placé dans des conditions plus sévères, l'exigence s'élève alors à 960°C. Ces valeurs de GWFI sont exigées, qu'il s'agisse de parties en contact avec des parties transportant le courant ou les maintenant en position, ou d'enveloppes et couvercles ne maintenant pas en position des parties transportant le courant.

De surcroît, une performance d'allumabilité des matériaux peut être requise selon la norme CEI 60695-2-13. La valeur GWIT (« *Glow Wire Ignition Temperature* ») permet de mesurer l'allumabilité du matériau ; une valeur minimum GWIT de 775°C est requise.

Des normes analogues existent aux Etats-Unis.

Les agents ignifuges les plus couramment utilisés et disponibles dans le commerce sont les agents ignifuges halogénés. Cependant, ces agents ignifuges halogénés présentent des inconvénients vis-à-vis de l'environnement ou de la santé : des problèmes de persistance, de bio-accumulation et de toxicité sont reportés et pris en considération par des organisations extragouvernementales ; certains de ces agents ignifuges à base de substances halogénées sont cités dans les listes des substances très préoccupantes.

Dans le futur, des règlements de plus en plus sévères entreront en vigueur et les agents ignifuges à base de composés halogénés pourraient être progressivement interdits. En conséquence, la conception de pièces ignifuges sans halogènes est nécessaire pour éliminer les préoccupations sanitaires et environnementales.

Des agents ignifuges qui ne sont pas basés sur des substances halogénées sont notamment les polyphosphates d'ammonium et les hydroxydes de métaux. Mais ces agents ignifuges non halogénés présentent aussi des inconvénients : par exemple, ils peuvent altérer les propriétés mécaniques des matières plastiques dans lesquelles ils sont incorporés. Ils peuvent également entraîner une corrosion de l'outillage utilisé pour la mise en forme des pièces plastiques. Parfois leur utilisation n'est pas compatible avec les températures requises pour le moulage des pièces.

En outre, les agents ignifuges et notamment les agents ignifuges halogénés sont généralement présents dans la totalité du volume de la pièce en plastique à laquelle on souhaite conférer des propriétés ignifuges, autrement dit, l'agent ignifuge est réparti dans la masse du plastique constituant la pièce. On peut dire que la pièce est une pièce « monobloc ».

La présence d'un agent ignifuge, notamment halogéné, dans la masse du plastique peut compromettre la recyclabilité des pièces en plastique en fin de vie.

En effet, de nombreux recycleurs de plastiques n'acceptent pas de pièces en plastique contenant des additifs considérés comme suspects du point de vue de leur toxicité. Ces composés considérés comme polluants des plastiques à recycler empêchent leur valorisation, et ce même dans le cas d'une filière de valorisation des déchets plastiques pour la production d'énergie.

Ainsi, la plupart des pièces en plastique utilisées dans l'industrie électrique, qui doivent satisfaire des normes sévères en matière de résistance au feu, ne sont pas recyclables et ne peuvent être qualifiées de pièces « respectueuses de l'environnement ».

Parmi les familles de plastiques ignifugés ou FR (« *Flame Retardant* » en anglais) figurent notamment des plastiques à base de polymères styréniques comme par exemple les polystyrènes (PS, FR) et les polystyrènes « choc » (« *high impact polystyrene* » ou HIPS, FR), les copolymères acrylonitrile butadiène-styrène (ABS, FR), et les mélanges de polycarbonates et d'ABS (PC ABS, FR). D'autres polymères industriels ignifugés clés comme les polyoléfines, les polycarbonates (PC, FR) ou les polyesters (polybutylène téréphtalate PBT, FR) sont également visés.

Les pièces à base de tels plastiques appartiennent à de nombreuses gammes de produits comme par exemple les prises de courant, les interrupteurs, les armoires électriques, les coffrets électriques, les éclairages de sécurité, les capteurs électriques, les onduleurs, les minuteurs, les gradateurs, les détecteurs de mouvements, etc.

On connaît par ailleurs les revêtements fonctionnels, c'est-à-dire des revêtements qui permettent de conférer diverses propriétés, fonctions, et notamment des propriétés ignifuges à une pièce en plastique.

Parmi les revêtements fonctionnels, on peut notamment mentionner les peintures intumescentes appliquées après un traitement préalable au plasma, et les surfaces ignifuges qui sont synthétisables par la technologie sol-gel.

Les procédés qui permettent de préparer de tels revêtements (multi)fonctionnels sont généralement longs et complexes, impliquant souvent de nombreuses étapes, et en particulier des étapes de séchage par exemple pour la peinture ou encore de durcissement de longue durée comme par exemple dans le cas des revêtements par voie « sol-gel ». En conséquence, le temps de cycle et le coût final de ces revêtements sont élevés.

En outre, il est souvent difficile de revêtir des pièces de petite ou moyenne taille telles que des interrupteurs, boîtiers, coffrets, socles, prises, en utilisant les procédés classiques de revêtement.

Le document EP-A-1375594 décrit des compositions ignifugées à base de polyamide et de polyoléfine comprenant un agent ignifugeant, un plastifiant phosphoré et une zéolithe.

Le document US-A1-2003/0127765 décrit un procédé de moulage dans lequel plusieurs polymères différents peuvent être extrudés de manière à former un produit composite à plusieurs couches, l'une de ces couches pouvant être une couche ignifuge.

Il existe donc au regard de ce qui précède un besoin pour des pièces à base de polymères thermoplastiques qui possèdent des propriétés ignifuges et qui ne contiennent pas d'agents ignifuges halogénés.

Il existe aussi un besoin pour des pièces à base de polymères thermoplastiques qui puissent être facilement recyclables, qui soient acceptées dans les filières de recyclage et dont les propriétés ignifuges soient améliorées.

Il serait aussi souhaitable que ces pièces soient fabriquées avec des matériaux ayant un faible impact sur les émissions de CO₂ pour contribuer à la diminution de l'effet de serre et éviter les changements climatiques qui en découlent.

Ces pièces doivent pouvoir être fabriquées par un procédé simple, fiable, peu coûteux comprenant un nombre limité d'étapes, mettant en oeuvre des moyens de production et des outillages simples, fiables, et de préférence des moyens et des outillages classiques, disponibles, éprouvés, déjà existants et ne nécessitant pas d'investissement spécifique.

Ces pièces doivent pouvoir être aussi des pièces de petites et moyennes tailles.

Le but de la présente invention est de fournir des pièces à base de polymères thermoplastiques ignifuges, et qui répondent, entre autres aux besoins et exigences énumérés plus haut.

Le but de la présente invention est aussi de fournir un procédé de préparation de telles pièces qui réponde entre autres aux besoins et exigences énumérés plus haut pour un tel procédé et qui permette notamment de préparer des pièces de petites et moyennes tailles.

Le but de la présente invention est encore de fournir des pièces à base de polymères thermoplastiques qui possèdent des propriétés ignifuges, et un procédé de préparation de ces pièces, ces pièces et ce procédé ne présentant pas les inconvénients défauts, limitations et désavantages des pièces et procédés de l'art antérieur.

### EXPOSÉ DE L'INVENTION

Ce but, et d'autres encore, sont atteints, conformément à l'invention, par une pièce comprenant un substrat en au moins un polymère thermoplastique, et une couche de matériau ignifuge enrobant le substrat de sorte que la surface externe de la pièce soit composée uniquement dudit matériau ignifuge, dans laquelle le matériau ignifuge comprend un mélange polymère d'une polyoléfine et d'un polyamide, et un composé ignifuge non-halogéné.

Une telle couche permet de doter la pièce d'une propriété de résistance au feu en mettant à profit le principe de l'intumescence.

Les revêtements intumescents développent en cas de contact avec la chaleur, une « meringue carbonée » qui les isole de la source chaude.

La pièce selon l'invention présente une structure spécifique, avec un substrat et une couche intumescente spécifique sur ce substrat. Cette structure peut être qualifiée de structure coeur (ou âme)- peau (ou enveloppe) (« *core-skin »* en anglais).

La pièce préférée selon l'invention dans laquelle une peau ignifuge à base d'un mélange de constituants spécifiques contenant :
- une matrice polymère obtenue à partir d'un alliage compatibilisé à base de polyoléfine et de polyamide (avantageusement du polyamide 6),
- un composé à base de polyphosphate d'ammonium,
- un renfort minéral qui pourra avantageusement faire appel à du verre,
- et un pigment ou colorant,
est disposée en surface d'un substrat basé sur un polymère thermoplastique n' a jamais été décrite ni suggérée dans l'art antérieur.

La pièce selon l'invention ne contient pas de composés considérés comme persistants, bio-accumulatifs ou toxiques, en particulier la pièce considérée dans son ensemble est exempte de composés halogénés (« *halogen free »* en anglais). Par analogie à la norme DIN VDE 0472 (815) dédiée aux câbles, les teneurs en chlore, en brome, ainsi que la teneur totale en chlore et brome, sont inférieures à 0,2%, et la teneur en fluor est inférieure à 0,1%.

Les avantages de la pièce selon l'invention proviennent essentiellement des excellentes propriétés de résistance au feu intrinsèques fournies par la peau intumescente spécifique, alors même que cette couche ne contient pas de composé halogéné.

Dans la pièce selon l'invention, à structure coeur-peau, le mélange intumescent se trouve uniquement dans une couche de surface de la pièce, et il ne s'agit plus d'un agent ignifuge incorporé dans l'ensemble du volume, dans la masse du plastique.

En d'autres termes, selon l'invention, on est passé d'une structure « monobloc » avec l'agent ignifuge incorporé dans la masse du plastique à une fonctionnalisation de surface apportant à cette dernière une propriété de résistance au feu par un effet d'intumescence.

Une telle structure « coeur - peau » confère à la pièce selon l'invention toute une série d'avantages par rapport aux pièces de l'art antérieur à structure « monobloc ». Il a été ainsi constaté de manière surprenante que la pièce à structure « coeur - peau » selon l'invention possédait un comportement au feu supérieur à celui d'une pièce à structure monobloc. Cela est démontré dans l'exemple 3 plus bas.

Les propriétés de résistance au feu de la pièce selon l'invention étant fondamentalement dues à la peau intumescente de surface, il n'est plus nécessaire d'incorporer des additifs ignifuges dans le coeur de la pièce, le substrat, pour lequel il n'est plus nécessaire d'avoir recours à des plastiques contenant, dans leur volume, des agents ignifuges et en particulier des agents ignifuges halogénés indésirables au vu de leur profil environnemental et sanitaire.

La pièce à structure « coeur - peau » selon l'invention possède aussi une aptitude au recyclage très nettement supérieure aux pièces à structure monobloc de l'art antérieur.

En adoptant la structure « coeur - peau » selon l'invention, l'additif ignifuge ne fait plus appel à des substances à base d'halogènes, et de plus les composés apportant la résistance au feu se trouvent localisés à la surface, les problèmes évoqués plus haut sont résolus. Au besoin, si la couche ignifuge est trop épaisse, elle peut éventuellement être retirée par exemple par abrasion (sablage), en fin de vie comme cela se fait déjà pour certaines peintures.

Au total, la gestion des pièces en plastique en fin de vie se trouve grandement améliorée.

Avantageusement, le polyamide est choisi parmi les polyamides aliphatiques tels que le polyamide 6 et la polyoléfine est choisie parmi les polyéthylènes et les polypropylènes.

Avantageusement, le mélange polymère est un mélange de polyoléfine et de polyamide 6.

De tels mélanges polymères sont disponibles auprès de la société ARKEMA^{®} sous la dénomination ORGALLOY^{®}.

Avantageusement, l'alliage correspondant à la désignation ORGALLOY^{®} RS 6010 est choisi.

Avantageusement, le composé ignifuge non-halogéné est choisi parmi les polyphosphates d'ammonium, et il représente avantageusement de 5% à 40% en masse par rapport à la masse totale du matériau ignifuge constituant la couche ignifuge, de préférence de 10% à 30% en masse par rapport à la masse totale du matériau ignifuge constituant la couche ignifuge (peau).

La couche ignifuge de la pièce selon l'invention lorsqu'elle est exposée à un feu va agir en tant que surface intumescente.

De fait, un feu est toujours une combinaison de trois facteurs, à savoir : un combustible solide, liquide ou gazeux, un comburant qui est généralement l'oxygène, et une source d'inflammation qui peut être par exemple une température élevée, une flamme, un court-circuit. Dans le cas où l'un de ces trois facteurs est absent, alors le feu ne peut pas démarrer ou s'éteint.

Or les systèmes intumescents stoppent la combustion auto-entretenue du plastique à un stade très précoce, à savoir lors de la dégradation thermique avec dégagement de combustibles gazeux.

Le processus d'intumescence résulte de la combinaison d'une carbonisation et d'un moussage, expansion, gonflement à la surface du polymère qui est en train de brûler. La couche carbonisée cellulaire expansée obtenue est capable de protéger le matériau sous-jacent de l'action du flux de chaleur ou de la flamme ; elle agit également en tant que barrière physique qui ralentit les transferts de masse et de chaleur entre les gaz et la phase condensée.

La couche ignifuge de la pièce selon l'invention est en un matériau spécifique comprenant entre autres, un mélange polymère spécifique se présentant sous forme d'un alliage à base de polyamide et d'une polyoléfine.

Dans ce mélange, le polyamide tel que le PA 6 joue le rôle de source de carbone et amorce le phénomène d'intumescence (en tant qu'agent de formation d'un résidu charbonneux « *char* », aussi appelé agent de charbonnement). Le rapport polyamide / polyoléfine est un paramètre qui permet au besoin d'adapter le seuil d'ignifugation.

La couche ignifuge comprend, en outre en tant que composant essentiel, un composé ignifuge non halogéné.

Les propriétés intumescentes de la couche ignifuge selon l'invention sont dues aux effets combinés que l'on peut qualifier de synergiques entre le mélange polymère spécifique décrit plus haut et ce composé ignifuge.

Ces effets combinés sont particulièrement remarquables lorsque le composé ignifuge non halogéné est un polyphosphate d'ammonium.

De tels composés sont disponibles auprès de la société CLARIANT^{®} sous les dénominations EXOLIT AP 422^{®}, EXOLIT AP 423^{®}, EXOLIT AP 462^{®}, EXOLIT AP 740^{®} et EXOLIT AP 742^{®} ; d'autres composés peuvent être utilisés comme par exemple le produit FR CROS 484 commercialisé par la société Budenheim^{®}.

L'EXOLIT AP 422^{®} est un des produits préférés. Il s'agit de polyphosphate d'ammonium pur à fines particules avec notamment une taille moyenne de particules d₅₀ d'environ 15 µm.

Les polyphosphates tels que l'EXOLIT AP 422^{®} ont une double action :
- en tant que source d'acide continue, ils participent à la réticulation du squelette carboné ;
- en tant qu'agent d'expansion, ils participent au gonflement, moussage, du fait du gaz ammoniac émis lors de leur combustion.

Ainsi, en combinant un mélange polymère tel qu'un mélange de type ORGALLOY^{®} avec un polyphosphate d'ammonium tel que l'EXOLIT AP 422^{®}, on obtient un effet ignifuge non linéaire (Voir Exemple 1, Tableau 1, plus bas).

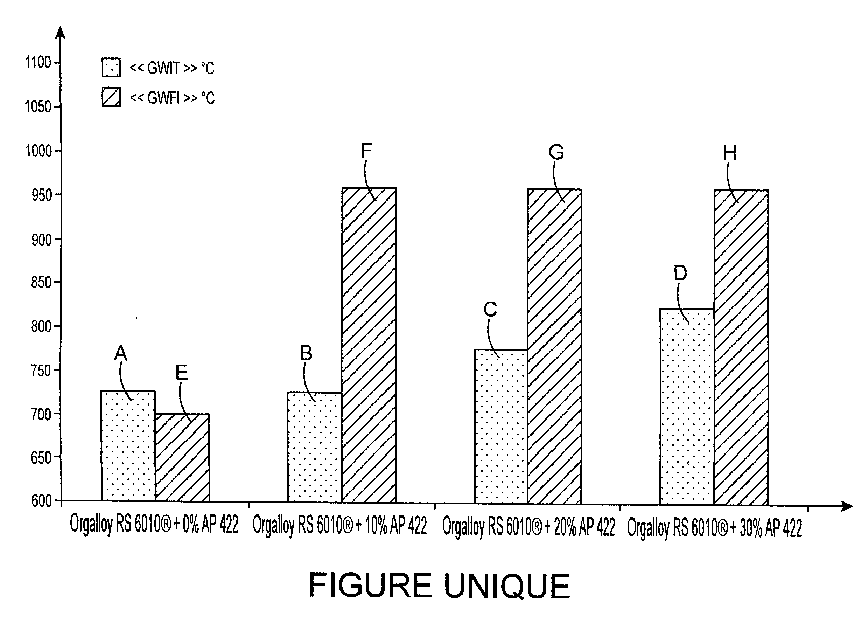

Par effet ignifuge non-linéaire, on entend que si on mesure l'influence de la teneur en AP 422 en mélange avec de l'ORGALLOY^{®}, on constate que la valeur du « GWIT » n'augmente pas linéairement avec la teneur en AP 422. De même, on constate aussi que la valeur du « GWFI » n'augmente pas linéairement avec la teneur du mélange en AP 422 (voir Exemple 1 et Figure unique).

Avantageusement, le matériau ignifuge comprend en outre une charge minérale comme des fibres et/ou billes de verre, représentant de 5% à 30% en masse, de préférence de 8% à 15% en masse, par rapport à la masse totale du matériau ignifuge qui constitue la couche ignifuge. L'incorporation d'une charge minérale telle que des fibres et/ou billes de verre permet d'améliorer la résistance de la peau et s'oppose au percement de la couche ignifuge lors des essais au fil incandescent chauffant tel que l'essai d'allumabilité (*GWIT*) de la norme CEI 60695-2-13. Les charges minérales et notamment les fibres et/ou les billes de verre permettent en effet de freiner la pénétration du fil incandescent lors de ces essais.

La quantité de charge minérale, telle que par exemple des fibres et/ou billes de verre influe sur la profondeur de pénétration du fil incandescent chauffant lors des essais de résistance au feu.

Lorsque la charge minérale est constituée par des fibres de verre, on pourra aussi utiliser comme mélange polymère, un mélange de polyoléfine et de polyamide 6 comprenant 30% en masse de fibre de verre disponible auprès de la société ARKEMA^{®} respectivement sous la dénomination ORGALLOY RS 6030^{®}.

Avantageusement, le matériau ignifuge comprend en outre au moins un additif qui modifie une ou plusieurs propriétés parmi les propriétés suivantes de la couche : l'aspect esthétique, la couleur, la résistance de la surface de la couche au vieillissement (par exemple un agent anti-UV), la résistance chimique de la surface de la couche vis-à-vis des substances chimiques telles que l'huile d'olive, la rugosité de surface, l'effet barrière à l'humidité, la résistance à l'usure.

Ces additifs doivent bien sûr être compatibles avec les autres constituants de la couche et notamment avec le mélange polymère.

Avantageusement, un des additifs sera choisi parmi les colorants et pigments. Un colorant ou pigment sera notamment incorporé dans la couche ignifuge dans le cas où le substrat ou coeur possède une couleur qui n'est pas appropriée pour la pièce, cela peut en particulier se produire lorsque le substrat ou coeur est en un polymère issu du recyclage : la couleur généralement sombre, peut nécessiter l'utilisation d'oxyde de titane (TiO₂), par exemple entre 1 et 5 parts en masse dans le mélange constituant la couche, pour un produit final blanc.

La résistance à la rayure peut être accrue par le recours aux billes de verre, qui pourront être silanisées pour permettre une bonne compatibilisation avec la matrice polymère.

De plus, en apportant la couleur et l'aspect par la couche de peau, il est possible de rationaliser les approvisionnements pour la matière constituant le substrat : un seul grade générique pourra suffire, puisque la différentiation liée à la couleur peut être apportée par la peau.

Pour remplir les conditions fixées par les normes en matière de résistance au feu, la couche ignifuge enrobera totalement le substrat, c'est-à-dire que toutes les surfaces du substrat sont revêtues par la couche ignifuge. Ce mélange est facile à transformer, chimiquement résistant et possède une excellente stabilité dimensionnelle.

Avantageusement, la couche ignifuge a une épaisseur supérieure ou égale à 0,2 mm, de préférence une épaisseur de 0,3 à 0,8 mm.

C'est le produit final qui définit l'épaisseur du coeur.

Le plus souvent cette épaisseur se situe entre 1 et 2 mm et peut aller jusqu'à 3 mm.

Avantageusement, la matière plastique, le polymère thermoplastique formant le substrat ne contient pas de composés halogénés, et la pièce selon l'invention est exempte d'halogène et peut donc prétendre à être recyclable.

Le polymère thermoplastique (constituant la matrice organique) du substrat ou coeur peut être un polymère « neuf » (vierge) ou bien être issu du recyclage ; il peut être partiellement recyclé (mélange vierge et recyclé) ou totalement recyclé.

Le polymère thermoplastique du coeur peut aussi comprendre, si possible en majorité voire en totalité, un polymère issu de bio ressources aussi appelé biopolymère, c'est-à-dire issu exclusivement d'organismes vivants, généralement végétaux, ou un polymère synthétisé à partir de ressources renouvelables, généralement végétales.

Avantageusement, le polymère thermoplastique constituant la matrice du plastique substrat ou coeur comprend une majorité en masse d'au moins un biopolymère et/ou d'au moins un polymère issu du recyclage, de préférence le polymère thermoplastique est constitué par au moins un biopolymère et/ou au moins un polymère issu du recyclage.

De cette manière, la pièce peut être qualifiée de pièce « respectueuse de l'environnement » car le polymère ou le mélange de polymères dont est issu son substrat minimise la demande en ressources fossiles épuisables (pétrole). En outre, l'utilisation de plastiques recyclés pour le coeur est un moyen de réduire le prix de ce substrat ou coeur et donc de la pièce finale.

Avantageusement, le polymère thermoplastique est choisi parmi les polyoléfines, les polyamides et leurs mélanges.

Parmi les polyoléfines, le recours à du PP (polypropylène) sera avantageux, en particulier s'il s'agit de PP « choc » vierge ou issu de recyclage.

Parmi les polyamides, le recours à du PA6 peut s'avérer approprié en grade vierge ou en grade recyclé post industriel.

De préférence, le polymère thermoplastique est constitué par un mélange d'une polyoléfine et d'un polyamide dont les constituants sont proches, en particulier chimiquement proches de, ou identiques à, ceux du mélange polyoléfine / polyamide formant la couche ignifuge.

En recourant à de tels substrats, on bénéficiera d'une bonne compatibilité chimique entre le coeur et la peau. Ainsi l'adhésion de la peau sur le coeur sera optimale.

De préférence encore, le polymère thermoplastique est constitué par un mélange d'une polyoléfine et d'un polyamide issus du recyclage.

De préférence, la pièce est une pièce de petite à moyenne taille dont la plus grande dimension est inférieure à 30 cm qui, selon l'invention, peuvent être facilement fabriquées. De la même manière, les pièces selon l'invention peuvent avoir des formes complexes.

La pièce selon l'invention peut être un boîtier ou une enveloppe d'appareillage(s) électrique(s), comme une prise de courant, un interrupteur, une armoire électrique, un coffret électrique, un éclairage de sécurité, un capteur électrique, un onduleur, un minuteur, un gradateur, ou un détecteur de mouvements.

Cependant eu égard à la structure « coeur - peau » de la pièce selon l'invention, il apparaît que les coffrets électriques seront particulièrement concernés. En effet, l'épaisseur des parois de ces coffrets est suffisante pour que le fait d'enrober selon l'invention le coeur d'une peau et non de faire une pièce monobloc en un matériau uniforme, présente tout son intérêt.

De plus, les coffrets ne sont pas exposés à des contraintes diélectriques significatives. Enfin les coffrets sont des applications pour lesquelles les alternatives aux retardateurs de flamme halogénés sont très attendues.

La pièce selon l'invention peut être fabriquée par divers procédés mettant en oeuvre diverses techniques de plasturgie, comme le surmoulage. Cependant, un procédé préféré pour fabriquer la pièce selon l'invention utilise la technologie d'injection multi matière, et notamment l'injection sandwich ou encore l'injection séquentielle de deux matières avec mouvement(s) interne(s) dans le moule.

L'invention a également trait à un procédé de préparation de la pièce décrite dans ce qui précède dans lequel on revêt par un procédé d'injection multimatière la totalité des surfaces d'un substrat en un polymère thermoplastique par une couche ignifuge comprenant un mélange d'une polyoléfine et d'un polyamide, et un composé ignifuge non-halogéné.

Cette couche ignifuge possède un comportement intumescent apporté par le mélange d'une polyoléfine et d' un polyamide d' une part et par la présence d'un composé ignifuge non-halogéné tel que le polyphosphate d'ammonium d'autre part.

Le procédé d'injection multimatière peut être par exemple un procédé de surmoulage d'insert. Il peut aussi faire appel à un procédé par injection sandwich ou encore à un procédé utilisant la technologie d'injection séquentielle de deux matières.

Bien adapté à la fabrication de pièces de taille petite à moyenne, ce procédé est fiable et ne comporte en fait qu'une seule étape, à l'issue de laquelle la pièce est obtenue sans qu'il soit nécessaire d'avoir recours à encore d'autres traitements. La durée nécessaire au déroulement du procédé et sa complexité sont donc considérablement réduites de même que son coût.

En particulier, le procédé selon l'invention ne requiert pas d'investissements spécifiques lourds pour pouvoir être mis en oeuvre par les plasturgistes. De fait, le procédé d'injection multimatière est exploité par différents secteurs industriels et il utilise des outillages classiques ; des installations industrielles mettant en oeuvre ce procédé existent déjà, notamment dans l'industrie automobile. Il est également possible de transformer une presse d'injection standard en lui ajoutant une seconde unité d'injection.

Le procédé selon l'invention est donc compatible avec les installations existantes pour le moulage de plastiques moyennant des adaptations généralement connues dans le métier. On peut estimer que le procédé par injection multimatière est la solution la plus économique pour préparer la structure spécifique coeur-peau de la pièce selon l'invention.

Comme on l'a déjà mentionné, l'utilisation de plastiques recyclés est aussi un moyen de réduire le prix du coeur de la pièce selon l'invention.

Le procédé selon l'invention est basé sur trois opérations et compétences dans le domaine de la plasturgie, à savoir :
- la formulation des plastiques : pour définir la composition de la peau éventuellement multifonctionnelle de la pièce afin qu'elle possède des propriétés ignifuges, et éventuellement d'autres propriétés, telles qu'une coloration, pigmentation ou des propriétés de barrière, notamment à l'humidité. La peau comprend à ces fins un mélange ignifuge à haute efficacité, et éventuellement d'autres additifs ou charges compatibles destinés à conférer les propriétés voulues à la peau.
- l'extrusion : pour la fabrication des granulés thermoplastiques utilisés pour préparer la peau, éventuellement multifonctionnelle ;
- le moulage : il peut mettre à profit par exemple le procédé de surmoulage d'insert, ou le procédé par injection sandwich ou encore le procédé utilisant la technologie d'injection séquentielle de deux matières.

D'autres effets et avantages de l'invention apparaîtront mieux à la lecture de la description détaillée qui suit, faite à titre illustratif et non limitatif dans laquelle sont notamment décrits des modes de réalisation particuliers de l'invention sous la forme d'exemples décrivant notamment des pièces selon l'invention et des pièces non conformes à l'invention et donnant les résultats d'essais de résistance au feu réalisés sur ces pièces.

Cette description est faite en référence au dessin joint donné à titre illustratif et non limitatif.

### BREVE DESCRIPTION DU DESSIN.

La Figure unique est un graphique qui donne la valeur du « GWIT » (barres B, C, D) et du « GWIF » (barres F, G, H) pour des matériaux ignifuges, mélanges intumescents selon l'invention, obtenus en combinant l'alliage de polymères disponible auprès de la société ARKEMA^{®} sous la dénomination commerciale ORGALLOY RS 6010^{®}, avec respectivement 10% (Barres B,F), 20% (Barres C, G), ou 30% en masse (Barres D, H), par rapport à la masse totale du matériau ignifuge, avec un agent ignifuge non halogéné qui est un polyphosphate d'ammonium disponible auprès de la société CLARIANT^{®} sous la dénomination commerciale AP 422 EXOLIT^{®}.

Une quatrième éprouvette testée à titre comparatif est constitué d'ORGALLOY RS 6010^{®} pur, sans addition d'agent ignifuge EXOLIT AP 422^{®} (Barres A, E).

### EXPOSÉ DÉTAILLÉ DE MODES DE RÉALISATION PARTICULIERS

On décrit dans ce qui suit la fabrication d'une pièce selon l'invention dans laquelle on utilise la technologie par injection multi matière, dont il est entendu qu'elle ne constitue qu'une technologie préférée pour la fabrication des pièces selon l'invention mais que d'autres technologies pourraient être mises en oeuvre.

On commence tout d'abord par préparer des granulés dont la composition correspond à la composition de la couche ignifuge selon l'invention telle que décrite plus haut. Ces granulés comprennent donc un mélange polymère entre une polyoléfine et un polyamide, un composé à base de polyphosphate d'ammonium ne faisant pas appel à des substances halogénées, et éventuellement, au moins un additif et/ou au moins une charge, par exemple des fibres et/ou billes de verre.

Ces granulés sont préparés en alimentant une extrudeuse, par une trémie, avec les différents constituants énumérés plus haut destinés à former les granulés. L'extrudât obtenu est ensuite refroidi puis soumis à une opération de pastillage, granulation pour donner des granulés ayant généralement une forme de cylindres, et d'une taille généralement standard (diamètre moyen de 2 mm pour une hauteur moyenne de 2 et 5 mm).

On prépare ensuite des pièces selon l'invention à structure coeur-peau par injection multi matière par exemple dans une machine mettant à profit l'injection « sandwich ».

Il s'agit d'une injection avec deux unités de plastification et un système de vanne rotative qui permet d'acheminer le flux de matière constituant le coeur puis le flux de matière constituant la peau. La gestion des flux au niveau du point d'injection est apportée par un bloc répartiteur. Il est important de noter que l'ultime opération du cycle consiste en une injection de matière peau qui a pour but d'une part de purger la vis en vue de la prochaine injection et d'autre part de revêtir de peau la zone qui correspond au point d'injection.

Plus précisément, une des vis de la machine d'injection multimatière est alimentée, par l'intermédiaire d'une trémie, avec les granulés préparés comme décrit plus haut destinés à former la peau, couche ignifuge tandis que l'autre vis est alimentée, par l'intermédiaire d'une trémie, par le polymère ou le mélange de polymères destinée à former le coeur de la pièce.

Le matériau destiné à former la peau et le matériau destiné à former le coeur sont acheminés par l'intermédiaire de canaux dans une buse d'injection qui injecte de manière séquentielle le matériau destiné à former le coeur, et le matériau destiné à former la peau, dans un moule dont la forme est adaptée à celle de la pièce que l'on souhaite préparer.

On obtient ainsi, dans le moule, une pièce conforme à l'invention présentant la structure coeur-peau voulue.

L'invention va maintenant être décrite en référence aux exemples suivants donnés à titre illustratif et non limitatif.

### Exemples.

### Exemple 1.

Dans cet essai dont le but est de décrire les propriétés intrinsèques du mélange constitutif de la peau de la pièce selon l'invention, différentes compositions sont comparées pour leur comportement au feu : on réalise des essais au fil incandescent sur des séries d'éprouvettes de dimensions 50 × 50 × 3 mm.

Trois des éprouvettes sont en des matériaux ignifuges qui correspondent à des mélanges intumescents selon l'invention, obtenus en combinant l'alliage de polymères disponible auprès de la société ARKEMA^{®} sous la dénomination commerciale ORGALLOY RS 6010^{®}, avec respectivement 10%, 20% ou 30% en masse, par rapport à la masse totale du matériau ignifuge, d'un agent ignifuge non halogéné qui est un polyphosphate d'ammonium disponible auprès de la société CLARIANT^{®} sous la dénomination commerciale AP 422 EXOLIT^{®}.

Une quatrième éprouvette testée à titre comparatif est constitué d'ORGALLOY RS 6010^{®} pur, sans addition d'agent ignifuge EXOLIT AP 422^{®}.

Les essais sont réalisés selon la norme CEI 60695-2-11. Les principaux résultats obtenus lors de ces essais sont regroupés dans le Tableau 1 ci-dessous, ainsi que sur la Figure unique :

**Tableau 1**

| Matériau de l'éprouvette (épaisseur 3 mm) | GWIT (°C) | GWFI (°C) |
|---|---|---|
| Orgalloy RS 6010^{®} | 725 | 700 |
| Orgalloy RS 6010^{®} + 10% AP 422 | 725 | 960 |
| Orgalloy RS 6010^{®} + 20% AP 422 | 775 | 960 |
| Orgalloy RS 6010^{®} + 30% AP 422 | 825 | 960 |

Ce tableau montre que l'addition de l'agent ignifuge au mélange de polymères permet d'accroître significativement les valeurs de « GWIT », et de « GWFI ».

### Exemple 2.

Dans cet exemple, on réalise des essais de comportement au feu, à savoir des essais au fil incandescent sur des éprouvettes pouvant posséder soit une structure « monobloc » soit une structure « coeur - peau ».

Trois variantes à structure « monobloc » mettent à profit des matériaux susceptibles de constituer le substrat de la pièce selon l'invention, à savoir : du polypropylène à résistance élevée aux chocs (HIPP) ; un mélange de polymère Acrylonitrile Butadiène Styrène (ABS) et de polycarbonate ; et un mélange à base de Polyamide 6 sous la désignation commerciale ORGALLOY^{®} RS 6010 produit par ARKEMA.

Ces éprouvettes sont préparées par simple injection du polymère ou du mélange de polymère. L'épaisseur des éprouvettes est de 3 mm.

Pour trois autres variantes, le coeur est réalisé à partir des matériaux précédemment cités, auxquels une peau est ajoutée, obtenue à partir du mélange ignifuge conforme à l'invention ; pour une question de simplification opératoire, la couche de surface est ici appliquée par surmoulage et uniquement sur la face destinée à recevoir le fil incandescent. La couche ignifuge possède une épaisseur de 0,8 mm, et le substrat une épaisseur de 3 mm.

Pour préparer les éprouvettes avec couche, ignifuge, on commence par préparer par extrusion des granulés dont la composition est celle du matériau ignifuge qui constitue la couche ignifuge (peau) selon l'invention, à partir d'un mélange de polymères renfermant 70 % en masse d'ORGALLOY RS 6010 produit par ARKEMA^{®}, et 10 % en masse de fibres de verre et 20 % en masse de polyphosphate d'ammonium EXOLIT AP 422 CLARIANT^{®}.

Les teneurs exprimées en % en masse se réfèrent à la masse totale du matériau ignifuge qui constitue la couche ignifuge (peau).

A l'issue de l'extrusion, le mélange extrudé est refroidi puis soumis à une opération de pastillage, granulation pour donner des granulés, pour préparer ensuite les éprouvettes finales à structure « coeur - peau » par surmoulage de la peau sur le coeur.

Les essais sont réalisés selon la norme IEC 60695-2-13 pour déterminer la *« Glow Wire Ignition Temperature »* et selon la norme IEC 60695-2-11 pour déterminer le « *Glow Wire Flammability Index* ».

Les principaux résultats obtenus lors de ces essais sont regroupés dans le Tableau 2 ci-dessous :

**Tableau 2**

| Eprouvette (épaisseur en mm) | GWIT (°C) | GWFI (°C) |
|---|---|---|
| Substrat à base de HIPP (3) | 725 | 700 |
| Substrat à base de HIPP avec une couche ignifuge (3,8) | 775 | 960 |
| Substrat à base d'un mélange PC + ABS (3) | 725 | 700 |
| Substrat à base d'un mélange PC + ABS avec une couche ignifuge (3,8) | 775 | 960 |
| Substrat à base d'un mélange ORGALLOY RS 6010 (3) | 725 | 700 |
| Substrat à base d'un mélange ORGALLOY RS 6010 avec une couche ignifuge (3,8) | 775 | 960 |

Ce tableau montre que les éprouvettes conformes à l'invention avec une couche ignifuge conforme à l'invention sur un substrat en polymère ou en un mélange de polymères quel qu'il soit permet d'accroître significativement les valeurs de GWIT, et de GWIF.

Les valeurs de GWIT et de GWFI des éprouvettes conformes à l'invention satisfont les exigences fixées par les normes européennes (CEI 60695-2-13 et 60695-2-11) en matière de résistance au feu des équipements électriques.

### Exemple 3.

Dans cet exemple, on réalise des essais de comportement au feu, à savoir des essais au fil incandescent sur 4 variantes.

Deux des variantes sont des éprouvettes de 50 × 50 × 3 mm dites « monobloc » conformes à l'art antérieur dans lesquelles l'agent ignifuge, retardateur de flamme est réparti dans la masse du polymère constituant le substrat et le substrat ne comporte pas de couche ignifuge conforme à l'invention. Dans un cas, il s'agit d'un polystyrène à résistance élevée aux chocs dans lequel est incorporé 5% en masse par rapport à la masse du polymère de l'agent ignifuge CESA-flam White SL00050150 de CLARIANT^{®} ; dans le deuxième, l'agent ignifuge est incorporé dans un ABS à raison de 5% en masse par rapport à la masse de l'ABS. Ici, la teneur de l'agent ignifuge est exprimée en % en masse par rapport au polymère à résistance élevée aux chocs ou encore à l'ABS auquel il est incorporé. En d'autres termes, dans cet exemple, 5 parts d'agent ignifuge CESA-flam sont ajoutées pour 100 parts de PS Choc ou d'ABS. Ces éprouvettes sont préparées par simple injection du polymère.

Les autres variantes sont des éprouvettes à structure finale bicouche conforme à l'exemple 2 ; par simplification opératoire, la peau ou couche de surface est ici appliquée par surmoulage sur la face destinée à recevoir le fil incandescent. La peau d'épaisseur 0,8 mm est obtenue à partir du mélange ignifuge conforme à l'invention, dans le mode de réalisation utilisé dans l'exemple 2. Le substrat ou partie massive, d'épaisseur 3 mm, est réalisé respectivement à base de Polypropylène Choc et à base de mélange polycarbonate et ABS, sans additif et notamment sans aucun agent ignifuge.

Ces deux variantes d'éprouvettes possèdent les dimensions suivantes 50 × 50 × 3,8 mm. Les essais sont réalisés selon les normes précédemment définies pour déterminer la GWIT et le GWFI.

Les principaux résultats obtenus lors de ces essais sont regroupés dans le Tableau 3 ci-dessous :

**Tableau 3**

| Variante (épaisseur mm) | Constituants | | GWIT (°C) | GWFI (°C) |
|---|---|---|---|---|
| Structure **« monobloc »** (3 mm) | HIPS, FR 55% Polyflam Clariant^{®} | | 725 | 700 |
| | ABS, FR | | 675 | 850 |
| Structure **« coeur - peau »** (coeur 3 mm / peau 0,8 mm) | Coeur PP choc | Peau mélange Orgalloy RS 6010, AP 422, Fibres de verre | 775 | 960 |
| | Coeur PC ABS | Peau mélange Orgalloy RS 6010, AP 422, Fibres de verre | 775 | 960 |

Le Tableau 3 montre clairement que les éprouvettes à structure coeur-peau ou bi-couche conformes à l'invention possèdent un comportement au feu très supérieur à celui des éprouvettes à structure monobloc qui ne comportent pas de couche ou peau ignifuge et dans lesquelles l'agent ignifuge est réparti dans la masse du polymère du substrat.

### Exemple 4 :

Dans cet exemple, on met en oeuvre des structures « monobloc » d'épaisseur 2 mm ou 3 mm et des structures « coeur - peau » bicouche (avec les mêmes simplifications opératoires que pour les exemples 2 et 3, à savoir un surmoulage) possédant des épaisseurs respectives de 1,5 mm et 0,5 mm. Les éprouvettes de dimensions 50 × 50 × 2 mm (ou 50 × 50 × 3 mm) sont soumises au test pratiqué selon la norme des essais d'inflammabilité au fil incandescent référencée CEI 60695-2-11, et pour part à un essai au fil incandescent (tel que défini par la norme CEI 60695-2).

De plus, un plastique basé sur une matrice obtenue à partir de polypropylène PP recyclé est également utilisé pour vérifier la possibilité de modifier sa couleur.

Deux variantes de structures « monobloc » sont moulées par injection : du PP Choc (PPC 7712 de TOTAL PETROCHEMICALS^{®}), et un mélange compoundé à base de polyoléfine et d'un composant bio sourcé (gamme MAJ' ECO^{®} produite par Ad Majoris). Ces deux matériaux sont utilisés pour deux variantes de structures « coeur - peau », qui sont surmoulées du mélange ignifuge intégrant un pigment blanc conforme à l'invention : ORGALLOY RS 6010 + 20% AP 422 + 10% Fibres de Verre + 2% TiO₂ ; un PP choc issu de recyclage fourni par la société GALLOO PLASTICS, qui présente une couleur sombre (le GP-PP-620) est également surmoulé du même matériau de peau. Les teneurs exprimées en % en masse se réfèrent à la masse totale du matériau ignifuge qui constitue la couche ignifuge (peau).

### Résultats :

On constate que l'adhésion entre « coeur » et « peau » est de très bonne qualité, que l'addition du pigment TiO₂ dans le matériau constituant la peau permet de modifier la couleur initiale du PP recyclé pour atteindre une couleur blanche ; les performances obtenues selon l'essai au fil incandescent sont reportées dans le Tableau 4 ci-dessous.

**Tableau 4**

| Variante (épaisseur mm) | Constituants | | GWFI (°C) | GWIT (°C) |
|---|---|---|---|---|
| Structure « monobloc » (3 mm) | PPC 7712 | | 700 | 725 |
| Structure « monobloc » (2 mm) | PPC | | < 650 | |
| | polyoléfine + composant bio sourcé | | 700 | |
| Structure « bicouche » (1,5 / 0,5 mm) | Coeur PP Choc | Peau | 960 | |
| | Coeur polyoléfine + composant bio sourcé | | 960 | |
| | Coeur PP recyclé | Peau | 960 | 775 |

### Exemple 5 :

Dans cet exemple, on réalise des essais de comportement au feu, à savoir des essais au fil incandescent, et des essais selon la norme UL 94 (Laboratoires American Underwriters) sur des éprouvettes qui possèdent une structure finale bicouche, « coeur - peau ».

Le coeur ou substrat est réalisé à partir des matières déjà citées dans les exemples 2, 3 et 4, à savoir :
- HIPP, ou mélange Polycarbonate et ABS, ou mélange Orgalloy^{®} RS 6010 (cf. exemple 2) ;
- ou mélange compoundé (à base de polyoléfine et d'un composant bio source : gamme MAJ' ECO^{®} produite par Ad Majoris) ou PP recyclé fourni par la société GALLOO PLASTICS (cf. exemple 4).

Le coeur est préparé par simple injection du polymère. La dimension des éprouvettes est de 50x50x3 mm (épaisseur 3 mm).

Au coeur ainsi réalisé une peau, couche ignifuge est ajoutée, obtenue à partir d'un mélange ignifuge conforme à l'invention ; pour une question de simplification opératoire, la couche de surface est ici appliquée par surmoulage et uniquement sur la face destinée à recevoir le fil incandescent. La couche ignifuge possède une épaisseur de 0,8 mm, et le substrat une épaisseur de 3 mm.

Pour préparer les éprouvettes avec la peau, couche, ignifuge, on commence par préparer par extrusion des granulés dont la composition est celle de la couche ignifuge selon l'invention, à partir d'un mélange de polymères renfermant 60% en masse d'ORGALLOY^{®} RS 6000 produit par ARKEMA^{®}, 10% en masse de billes de verre Micropearl^{®} 050-20-A0 de SOVITEC^{®}, et 30% en masse de polyphosphate d'ammonium FR CROS 484 de BUDENHEIM^{®}.

Les teneurs sont exprimées en % en masse et se référent à la masse totale du matériau ignifuge qui constitue la couche ignifuge.

Par rapport aux éprouvettes à structure « coeur-peau » de l'exemple 2, on utilise donc pour la couche, peau, ignifuge une formulation qui comprend un alliage ORGALLOY^{®} RS 6000 d'ARKEMA^{®} au lieu de l'alliage ORGALLOY^{®} 6010, et un composé ignifuge qui est le FR CROS 484 de BUDENHEIM^{®} au lieu de l'EXOLIT^{®} AP 422 de CLARIANT^{®}. Cependant, ce qui est déterminant, par rapport aux éprouvettes à structure « coeur-peau » de l'exemple 2, c'est surtout que l'on utilise pour la couche, peau ignifuge une teneur plus élevée en agent, composé ignifuge (30% en masse au lieu de 20% en masse), en combinaison avec des billes de verre en lieu et place des fibres de verre utilisées dans l'exemple 2.

A l'issue de l'extrusion, le mélange extrudé est refroidi puis soumis à une opération de pastillage, granulation pour donner des granulés, pour préparer ensuite les éprouvettes finales à structure « coeur-peau » par surmoulage de la peau sur le coeur.

Des essais sont réalisés selon la norme IEC 60695-2-13 pour déterminer la « Glow Wire Ignition Temperature » et selon la norme IEC 60695-2-11 pour déterminer le « Glow Wire Flammability Index ».

Les « performances feu » des éprouvettes selon l'invention, préparées dans cet exemple, sont les suivantes :
GWIT : 825 °C ;
GWFI : 960 °C.

On réalise, en outre, des essais de combustion verticaux selon la norme UL 94 V (Vertical Burning) des Laboratoires American Underwriters.

Les résultats reportés font référence aux tests UL 94 réalisés en conformité avec la norme NF EN 60695-11-10 de Février 2010.

Les éprouvettes selon l'invention sont classées UL 94 V-2.

## Revendications

1. Pièce comprenant un substrat en au moins un polymère thermoplastique, et une couche de matériau ignifuge enrobant le substrat de sorte que la surface externe de la pièce soit composée uniquement dudit matériau ignifuge, dans laquelle le matériau ignifuge comprend un mélange polymère d'une polyoléfine et d'un polyamide, et un composé ignifuge non-halogéné.

2. Pièce selon la revendication 1, dans laquelle le polyamide est choisi parmi les polyamides aliphatiques, et la polyoléfine est choisie parmi les polyéthylènes et les polypropylènes.

3. Pièce selon l'une quelconque des revendications précédentes, dans laquelle le mélange polymère est un mélange de polyoléfine et de polyamide 6.

4. Pièce selon l'une quelconque des revendications précédentes, dans laquelle le composé ignifuge non-halogéné est choisi parmi les polyphosphates d'ammonium.

5. Pièce selon l'une quelconque des revendications précédentes, dans laquelle le composé ignifuge non halogéné représente de 5% à 40% en masse, de préférence de 10% à 30% en masse par rapport à la masse totale du matériau ignifuge qui constitue la couche ignifuge.

6. Pièce selon l'une quelconque des revendications précédentes, dans laquelle la couche ignifuge comprend en outre une charge minérale comme des fibres et/ou billes de verre, représentant de 5% à 30% en masse, de préférence de 8% à 15% en masse, par rapport à la masse totale du matériau ignifuge qui constitue la couche ignifuge.

7. Pièce selon l'une quelconque des revendications précédentes, dans laquelle le matériau ignifuge comprend en outre au moins un additif qui modifie une ou plusieurs propriétés parmi les propriétés suivantes de la couche : l'aspect esthétique, la couleur, la résistance de la surface de la couche au vieillissement, la résistance chimique de la surface de la couche vis-à-vis des substances chimiques telle que l'huile d'olive, la rugosité de surface, les propriétés de barrière à l'humidité, la résistance à l'usure.

8. Pièce selon l'une quelconque des revendications précédentes, dans laquelle la couche ignifuge a une épaisseur supérieure à 0,2 mm, de préférence une épaisseur de 0,3 à 0,8 mm.

9. Pièce selon l'une quelconque des revendications précédentes, dans laquelle le polymère thermoplastique comprend une majorité en masse d'au moins un biopolymère et/ou d'au moins un polymère issu du recyclage, de préférence le polymère thermoplastique est constitué par au moins un biopolymère et/ou au moins un polymère issu du recyclage.

10. Pièce selon l'une quelconque des revendications précédentes, dans laquelle le polymère thermoplastique est choisi parmi les polyoléfines, les polyamides et leurs mélanges.

11. Pièce selon la revendication 10, dans laquelle le polymère thermoplastique est constitué par un mélange d'une polyoléfine et d'un polyamide dont les constituants sont proches de, ou identiques à, ceux du mélange d'une polyoléfine et d'un polyamide formant la couche ignifuge.

12. Pièce selon l'une quelconque des revendications précédentes, qui est une pièce dont la plus grande dimension est inférieure à 30 cm.

13. Pièce selon l'une quelconque des revendications précédentes, qui est un boîtier ou une enveloppe d'appareillage(s) électrique(s), comme une prise de courant, un interrupteur, une armoire électrique, un coffret électrique, un éclairage de sécurité, un capteur électrique, un onduleur, un minuteur, un gradateur, ou un détecteur de mouvements.

14. Procédé de préparation de la pièce selon l'une quelconque des revendications 1 à 13, dans lequel on revêt par un procédé d'injection multi-matière la totalité des surfaces d'un substrat en un polymère thermoplastique par une couche ignifuge comprenant un mélange d'une polyoléfine et d'un polyamide, et un composé ignifuge non-halogéné.

15. Procédé selon la revendication 14, dans lequel le procédé d'injection utilise la technologie par surmoulage d'insert, ou par injection sandwich ou par injection séquentielle de deux matières.

## Patentansprüche

1. Teil, ein Substrat aus mindestens einem thermoplastischen Polymer und eine Schicht aus einem feuerhemmenden, das Substrat derart umhüllenden Material umfassend, dass die Außenoberfläche des Teils nur aus diesem feuerhemmenden Material besteht, und bei dem das feuerhemmende Material ein Polymergemisch aus einem Polyolefin und einem Polyamid sowie eine nicht-halogenierte feuerhemmende Verbindung umfasst.

2. Teil nach Anspruch 1, bei dem das Polyamid ausgewählt wird unter den alipathischen Polyamiden, und das Polyolefin ausgewählt wird unter den Polyethylenen und den Polypropylenen.

3. Teil nach einem der vorhergehenden Ansprüche, bei dem das Polymergemisch ein Gemisch aus Polyolefin und Polyamid 6 ist.

4. Teil nach einem der vorhergehenden Ansprüche, bei dem die nicht-halogenierte feuerhemmende Verbindung ausgewählt wird unter den Ammoniumpolyphosphaten.

5. Teil nach einem der vorhergehenden Ansprüche, bei dem die nicht-halogenierte feuerhemmende Verbindung einen Massenanteil von 5% bis 40%, vorzugweise 10% bis 30% in Bezug auf die Gesamtmasse des feuerhemmenden Materials darstellt, das die feuerhemmende Schicht bildet.

6. Teil nach einem der vorhergehenden Ansprüche, bei dem die feuerhemmende Schicht außerdem einen mineralischen Inhalt wie Fasern und/oder Glaskugeln umfasst, die einen Massenanteil von 5% bis 30%, vorzugweise 8% bis 15% in Bezug auf die Gesamtmasse des feuerhemmenden Materials darstellt, das die feuerhemmende Schicht bildet.

7. Teil nach einem der vorhergehenden Ansprüche, bei dem die feuerhemmende Schicht außerdem einen Zusatz enthält, der eine oder mehrere Eigenschaften unter den folgenden Eigenschaften der Schicht verändert : das ästhetische Aussehen, die Farbe, die Widerstandsfähigkeit der Oberfläche der Schicht gegen Alterung, den chemischen Widerstand der Oberfläche der Schicht gegen chemische Substanzen wie etwa Olivenöl, die Oberflächenrauhigkeit, die Feuchtigkeitsbarriere-Eigenschaften, die Verschleißfestigkeit.

8. Teil nach einem der vorhergehenden Ansprüche, bei dem die feuerhemmende Schicht eine Dicke von mehr als 0,2 mm und vorzugsweise eine Dicke von 0,3 bis 0,8 mm hat.

9. Teil nach einem der vorhergehenden Ansprüche, bei dem das thermoplastische Polymer überwiegend aus wenigstens einem Biopolymer und/oder wenigstens einem recycelten Polymer besteht, wobei das thermoplastische Polymer vorzugsweise aus wenigstens einem Biopolymer und/oder wenigstens einem recycelten Polymer besteht.

10. Teil nach einem der vorhergehenden Ansprüche, bei dem das thermoplastische Polymer ausgewählt wird unter den Polyolefinen, den Polyamiden und ihren Gemischen.

11. Teil nach Anspruch 10, bei dem das thermoplastische Polymer aus einem Gemisch aus einem Polyolefin und einem Polyamid besteht, dessen Bestandteile ähnlich oder gleich sind wie die des Gemisches aus einem Polyolefin und einem Polyamid, das die feuerhemmende Schicht bildet.

12. Teil nach einem der vorhergehenden Ansprüche, das ein Teil ist, dessen größte Abmessung kleiner als 30 cm ist.

13. Teil nach einem der vorhergehenden Ansprüche, das ein Teil ist, das ein Gehäuse oder eine Hülle für elektrische(s) Gerät(e) ist, wie etwa eine Steckdose, ein Schalter , ein Elektrogeräteschrank, ein Elektrokasten, eine Sicherheitsbeleuchtung, ein elektrischer Sensor, ein Wechselrichter, eine Zeitschaltuhr, ein Dimmer oder ein Bewegungsmelder.

14. Verfahren zur Herstellung des Teils nach einem der Ansprüche 1 bis 13, bei dem man die Gesamtheit der Oberflächen eines Substrats aus einem thermoplastischen Polymer durch ein Mehrkomponenten-Spritzverfahren mit einer feuerhemmenden Schicht überzieht, die ein Gemisch aus einem Polyolefin und einem Polyamid sowie eine nicht-halogenierte feuerhemmende Verbindung umfasst.

15. Verfahren nach Anspruch 14, bei dem das Spritzverfahren die Technik des Eingießens von Einsätzen oder des Sandwich-Spritzgießens oder des Zweikomponenten-Reihenspritzgießens benutzt.

## Claims

1. A part comprising a substrate made of at least one thermoplastic polymer, and a layer of a fire-retardant material coating the substrate such that the outer surface of the part consists solely of said fire-retardant material, wherein the fire-retardant material comprises a polymer blend of a polyolefin and a polyamide, and a non-halogenated fire-retardant compound.

2. A part according to claim 1, in which the polyamide is chosen from among the aliphatic polyamides, and the polyolefin is chosen from among the polyethylenes and the polypropylenes.

3. A part according to any one of the preceding claims, in which the polymer blend is a blend of polyolefin and polyamide 6.

4. A part according to any one of the preceding claims, in which the non-halogenated fire-retardant compound is chosen from among the ammonium polyphosphates.

5. A part according to any one of the preceding claims, in which the non-halogenated fire-retardant compound represents 5% to 40% by mass, and preferably 10% to 30% by mass, relative to the total mass of the fire-retardant material constituting the fire-retardant layer.

6. A part according to any one of the preceding claims, in which the fire-retardant layer further comprises a mineral filler such as glass fibres and/or beads, representing 5% to 30% by mass, and preferably 8% to 15% by mass, relative to the total mass of the fire-retardant material constituting the fire-retardant layer.

7. A part according to any one of the preceding claims, in which the fire-retardant material further comprises at least one additive which modifies one or more properties among the following properties of the layer: the aesthetic appearance, the colour, the surface resistance of the layer versus ageing, the chemical resistance of the surface of the layer to chemical substances such as olive oil, the surface roughness, the moisture barrier properties, and the wear resistance.

8. A part according to any one of the preceding claims, in which the fire-retardant layer is more than 0.2 mm thick, and preferably from 0.3 to 0.8 mm thick.

9. A part according to any one of the preceding claims, in which the thermoplastic polymer comprises a majority by mass of at least one biopolymer and/or of at least one polymer derived from recycling; the thermoplastic polymer is preferably constituted by at least one biopolymer and/or at least one polymer derived from recycling.

10. A part according to any one of the preceding claims, in which the thermoplastic polymer is chosen from among the polyolefins, the polyamides and the blends thereof.

11. A part according to claim 10, in which the thermoplastic polymer is constituted by a blend of a polyolefin and of a polyamide the constituents of which are close or identical to those of the blend of a polyolefin and of a polyamide forming the fire-retardant layer.

12. A part according to any one of the preceding claims, which is a part the largest dimension of which is less than 30 cm.

13. A part according to any of the previous claims, which is a box, or enclosure of an electrical device or devices, such as a socket, a switch, an electrical cabinet, an electrical box, a security lighting device, an electrical sensor, an inverter, a timer, a dimmer, or a motion detector.

14. A method for producing the part according to any one of claims 1 to 13, in which all the surfaces of a substrate made of a thermoplastic polymer are coated by a bi-injection method with a fire-retardant layer comprising a blend of a polyolefin and a polyamide, and a non-halogenated fire-retardant compound.

15. A method according to claim 14, in which the injection method uses the technology of insert overmoulding, or by sandwich injection, or by sequential injection of two materials.
